Europäisches Patentamt

European Patent Office

Office européen des brevets

(11) Publication number: **0 397 381**
**A2**

# EUROPEAN PATENT APPLICATION

(21) Application number: **90304768.6**

(22) Date of filing: **02.05.90**

(51) Int. Cl.⁵: **H04N 9/31**

(30) Priority: **08.05.89 JP 114728/89**

(43) Date of publication of application:
**14.11.90 Bulletin 90/46**

(84) Designated Contracting States:
**DE FR GB**

(71) Applicant: **MATSUSHITA ELECTRIC
INDUSTRIAL CO., LTD.**
**1006, Oaza Kadoma
Kadoma-shi, Osaka-fu, 571(JP)**

(72) Inventor: **Uno, Mitsuhiro**
**Manshon Katsura 305, 12 Hiyoshicho
2-chome
Moriguchi-shi(JP)**
Inventor: **Hotta, Sadayoshi**
**1-10 Koda 1-chome
Hirakata-shi(JP)**
Inventor: **Kobayashi, Ikunori**
**1-7 Horiagemidorimachi 2-cho
Sakai-shi(JP)**

(74) Representative: **Votier, Sidney David et al
CARPMAELS & RANSFORD 43, Bloomsbury
Square
London WC1A 2RA(GB)**

(54) Projection type display unit using liquid crystal display devices.

(57) In a projection type display unit in which three liquid crystal devices are provided for R, G and B lights, a correction circuit is disposed in each liquid crystal display device in order to achieve color balance. In conventional apparatus a different correction must be made to each liquid crystal display device and therefore one and the same correction circuit cannot be used. By providing a means such as a filter that makes the luminance of a light beam vary in the front or rear of liquid crystal devices after a white light is divided into R, G and B lights, the correction for each liquid crystal display device is made uniform and the use of one and the same correction circuit is made possible. As a result, the construction of the unit is simplified and an excellent color balance is obtained.

FIG. 1

## PROJECTION TYPE DISPLAY UNIT USING LIQUID CRYSTAL DISPLAY DEVICES

### BACKGROUND OF THE INVENTION

The present invention relates to a projection type display unit which obtains a picture image by combining and projecting optical images formed in a plurality of liquid crystal display devices.

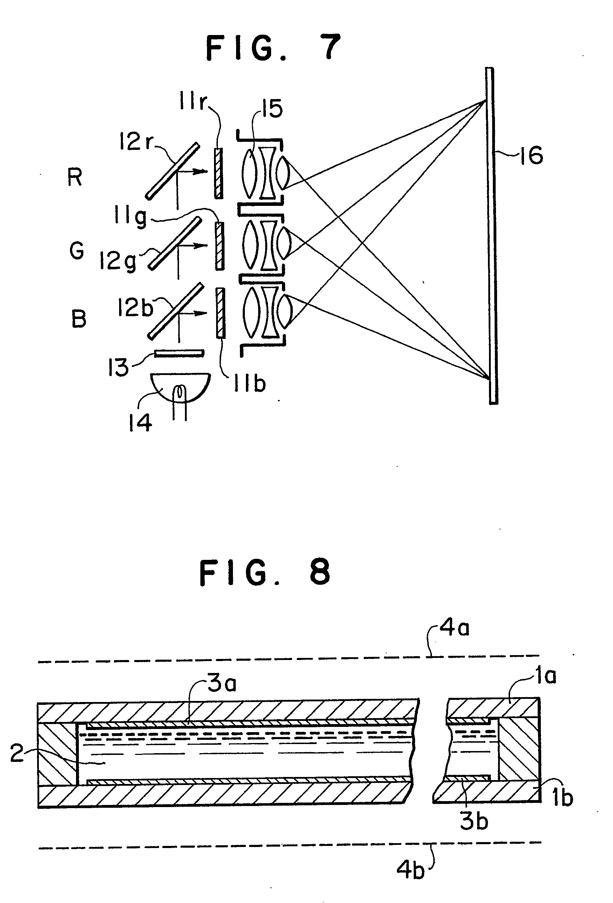

One example of a conventional projection type display unit, in which three liquid crystal display devices (LCD) 11r, 11g and 11b are used, is shown in Fig. 7. Picture images corresponding to three primary colors R, G and B are formed on these three devices (LCD) 11r, 11g, and 11b, respectively. After a white light from a light source 14 is made to pass through an infrared-ray cutting filter 13, it is divided into the three primary colors R, G and B by using dichroic mirrors 12r, 12g and 12b. Picture-image light obtained by introducing these three primary colors into each corresponding LCD is projected and combined on a screen 16 by means of projection lenses 15r, 15g and 15b. In order to reproduce (referred to as "achieving white balance") a white or gray color on a screen, which humans feel most natural in the sense of sight, the luminance ratio of R, G and B must be set to a certain value. For example, by setting the luminance ratio of the three primary colors R (wavelength: 610 nm), G (wavelength: 545 nm) and B (wavelength: 450 nm) to about 3: 6: 1, a white or gray color without coloring can be reproduced. However, this ratio varies as a result of changes in wavelength and spectroscopic characteristics of three primary color lights.

Next, the method of adjusting white balance in the prior art will be explained. The illumination ratio of R, G and B lights entered into the three LCDs usually differs from the above-described value. When three LCDs are driven under the same conditions, a white balance cannot be achieved on a screen. Thus, in the prior art, a signal voltage which is applied to an LCD is made to vary among LCDs corresponding to R, G and B and a white balance is achieved by varying its transmittance.

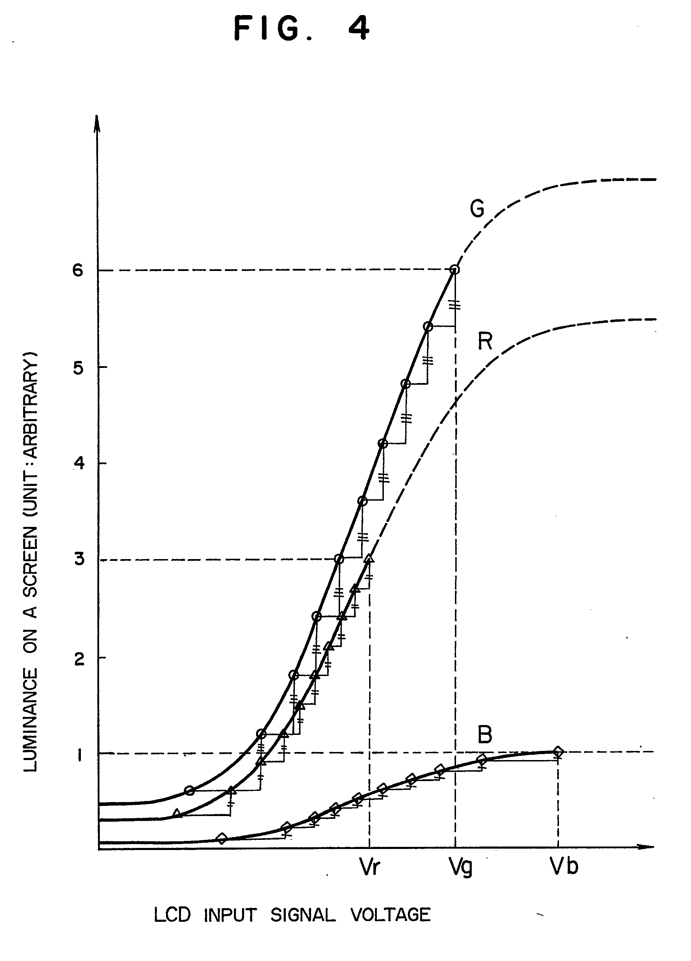

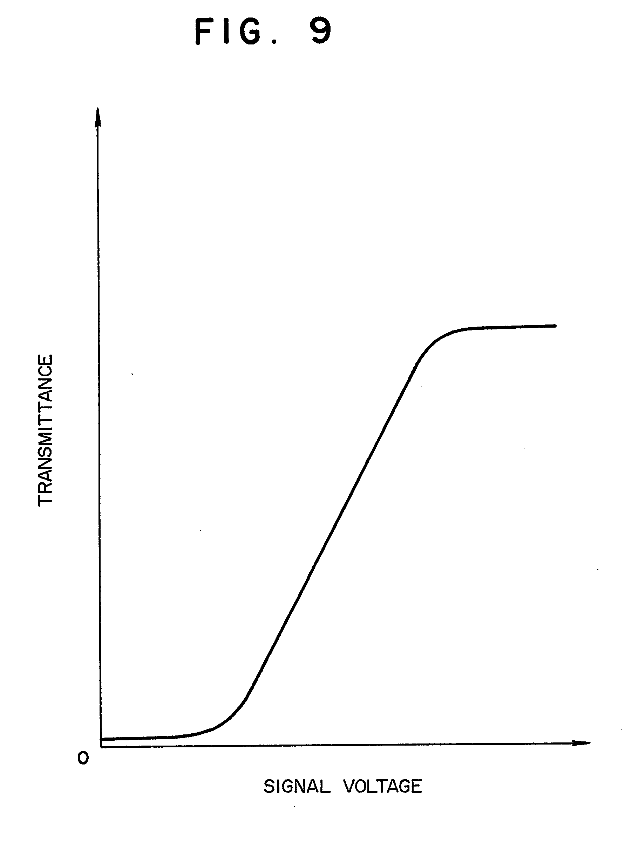

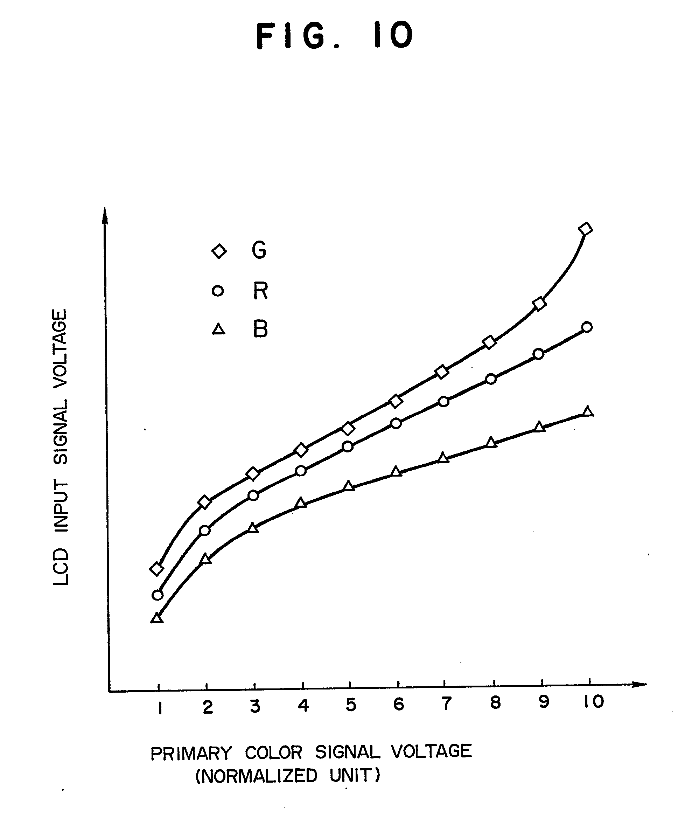

One example of that will be explained with reference to Figs. 4, 8, 9 and 10. Fig. 8, as an example, shows the cross section of an LCD in which a twisted-nematic (TN) mode liquid crystal is used. A liquid crystal is sandwiched between two transparent boards 1a and 1b, the inner surfaces of which are opposed to each other and orientation processing has been performed. Polarizing plates 4a and 4b are disposed in the interfaces between the outside atmosphere and two transparent boards so that polarizing axises are in parallel to each other. A transparent electrode is disposed on the side in contact with the liquid crystals of the two transparent boards. By applying a signal voltage between these two transparent electrodes 3a and 3b, transmittance can be varied. Fig. 9 shows the transmittance-signal voltage characteristics of an LCD. Fig. 4 shows the luminance - signal voltage characteristics for R (wavelength: 610 nm), G (wavelength: 545 nm) and B (wavelength: 450 nm) on a screen measured by driving LCDs for R, G, B, which are incorporated in a projection type display unit of Fig. 8, independently from each other. Since the luminance ratio of the R, G and B is not 3: 6: 1 under the same signal voltage, a white balance cannot be achieved by driving an LCD under the same condition. Therefore, as shown in Fig. 4, by lowering the maximum applied signal voltage (Vr, Vg, Vd) successively in the order of G, R and B, the maximum luminance ratio of R, G and B on a screen is set to 3: 6: 1. Next, the operation of a correction circuit for enabling good gradation display in the prior art will be explained. Gradation display in which luminance is changed to 10 stages at equal intervals will be considered. The symbols $\Delta$, $O$, and $\diamondsuit$ shown in Fig. 4 represent luminance-LCD input signal voltage characteristics in the case where 10-stage gradation display is performed with respect to R, G and B, respectively. As is apparent from the figure, linearity is lost at the rise section or at the saturation section and the inclination is moderate. Therefore, if primary colors corresponding to the R, G and B in proportion to the luminance obtained from a television signal is inputted to an LCD as it is, a good gradation display cannot be expected. A primary color must be adjusted using a correction circuit. Fig. 10 shows input and output characteristics of this correction circuit. The input voltage in the horizontal axis corresponds to the primary color signal voltage of each R, G and B while the output voltage in the vertical axis corresponds to LCD input signal voltage of each R, G and B. Such correction as to enlarge the low voltage section or the high voltage section of the primary color signal voltage is applied. At this point, it is understood that the characteristics of correction circuits differ for the primary color signals for R, G and B. As regards B, such a correction as to enlarge the low voltage section or the high voltage section of the primary color signal voltage is applied, whereas as regards R and G, only the low voltage section is enlarged. The amplification factor also differs for R, G and B. That is, correction circuits having different characteristics must be provided on the LCDs corresponding to the R, G and B.

In the case of the prior art, LCDs corresponding to R and G are not supplied with a signal until transmittance reaches a maximum saturation state. As a result, the following problem arises. First, a light of unnecessarily high luminance is projected to LCDs for R and G in a non-display state. As a result, leakage light from LCDs increases and is projected on a screen as it is. As a result, the brightness of black on a screen increases. On account of this contrast decreases and a clear picture image cannot be obtained. Second, in order to perform an excellent gradation display, as shown in Fig. 10, primary color signals of R, G and B must be corrected using correction circuits having different characteristics to each other before they are input to LCDs. For this reason, the structure of a driving circuit is complex.

## SUMMARY OF THE INVENTION

Accordingly, it is an object of the present invention to provide a projection type display unit capable of lowering the brightness of black on a screen, increasing contrast, and obtaining a clear picture image. Another object of the present invention is to simplify the structure of a driving circuit.

A means for varying the luminance ratio of R, G and B is provided in the light path between a light source and a screen so that the displayed picture image, which is emitted through three liquid crystal display devices in a state in which transmittance has reached a maximum saturation state or transmittances of them are almost equal and which are combined on a screen, becomes a well-color-balanced white color.

These and other objects, features and advantages of the present invention will become clear when reference is made to the following description of the preferred embodiments of the present invention, together with the accompanying drawings.

## BRIEF DESCRIPTION OF THE DRAWINGS

Fig. 1 is a schematic configurational view of a projection type display unit using liquid crystal devices in a first embodiment of the present invention;

Fig. 2 is a schematic configurational view of a projection type display unit using liquid crystal display devices in a second, third, and fourth embodiments of the present invention;

Fig. 3 is a graph showing luminance characteristics of R, G and B on a screen with respect to an input signal voltage to the liquid crystal display devices for the three primary color lights in the first and second embodiments of the present invention;

Fig. 4 is a graph showing luminance characteristics of the R, G and B on a screen with respect to the input signal voltage to liquid crystal devices in a conventional projection type display unit;

Fig. 5 is a graph shows spectroscopic characteristics in the case where an interference filter is disposed and white balance is achieved on a screen in the third embodiment;

Fig. 6 is a schematic configurational view explaining the fact the amounts of incident light to LCDs are controlled by using polarizing plates in the fourth embodiment;

Fig. 7 is a schematic configurational view of a conventional projection type liquid-crystal display unit;

Fig. 8 is a cross section of a liquid crystal device in which TN mode liquid crystals are used;

Fig. 9 is a graph showing transmittance-signal voltage characteristics of liquid crystal display devices;

Fig. 10 is a graph showing the correction circuit characteristics of the primary color signals for each of the R, G and B in the prior art; and

Fig. 11 is a graph showing the correction circuit characteristics of the primary color signals for each of the R, G and B in the present invention.

## DETAILED DESCRIPTION OF THE INVENTION

First Embodiment

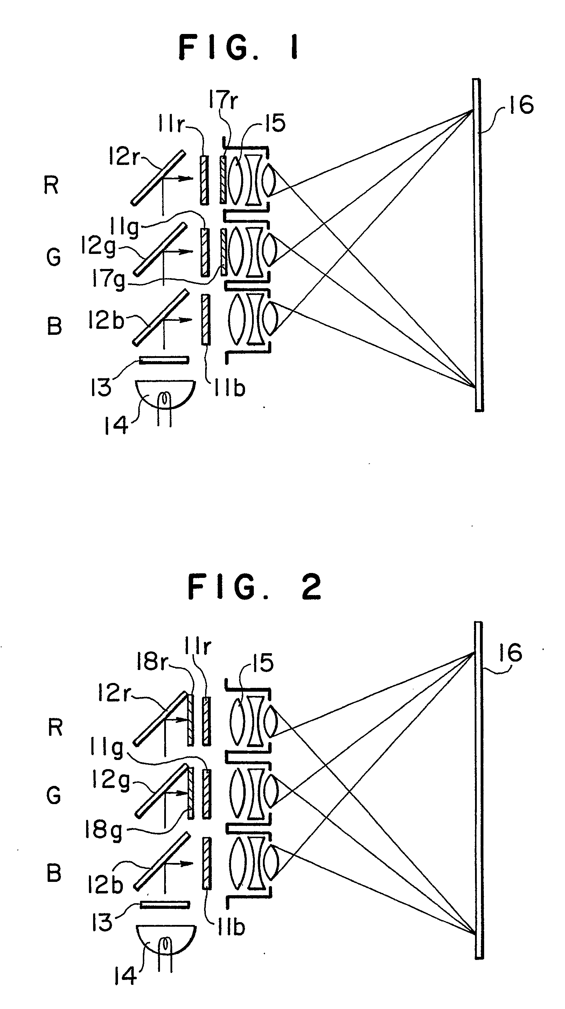

A description will be given of a first embodiment with reference to Figs. 1, 3 and 4. Fig. 1 shows a projection type display unit of the present invention in which three liquid crystal display devices (LCD) 11r, 11g and 11b are used. Picture images corresponding to three primary colors R, G and B are formed through these three devices (LCD) 11r, 11g, and 11b, respectively. After a white light from a light source 14 is made to pass through an infrared-ray cutting filter 13, it is divided into the three primary colors R (wavelength: 610 nm), G (wavelength: 545 nm) and B (wavelength: 450 nm) by using dichroic mirrors 12r, 12g and 12b. Picture-image light obtained by introducing the these three primary colors into respective corresponding LCDs is projected and combined on a screen 16 by means of projection lenses 15r, 15g and 15b. Further, neutral density filters 17r and 17g of transmittances 54% and 86% respectively are disposed on the emission side of LCDs corresponding to R and G. Fig. 4 shows the luminance-signal voltage characteristics on a screen when the neutral density filters 17r and 17g are not disposed. The luminance ratio of R, G and B is made 3: 6: 1 by lowering maximum applied signal voltages to the LCDs for R and G and a contrast when white balance is achieved is
CR = 94.

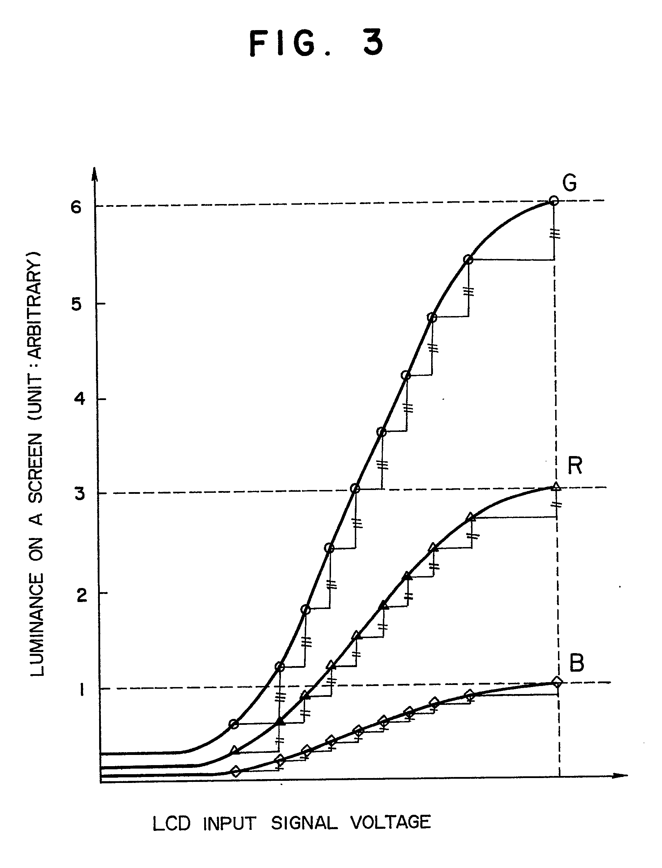

Fig. 3 shows the luminance-signal voltage characteristics on a screen when the neutral density filters 17r and 17g are disposed and white balance is achieved. The contrast in this case is
CR = 150.
By effecting this embodiment in this manner, the contrast is considerably improved and this embodiment has such an advantage that a clear picture image can be obtained.

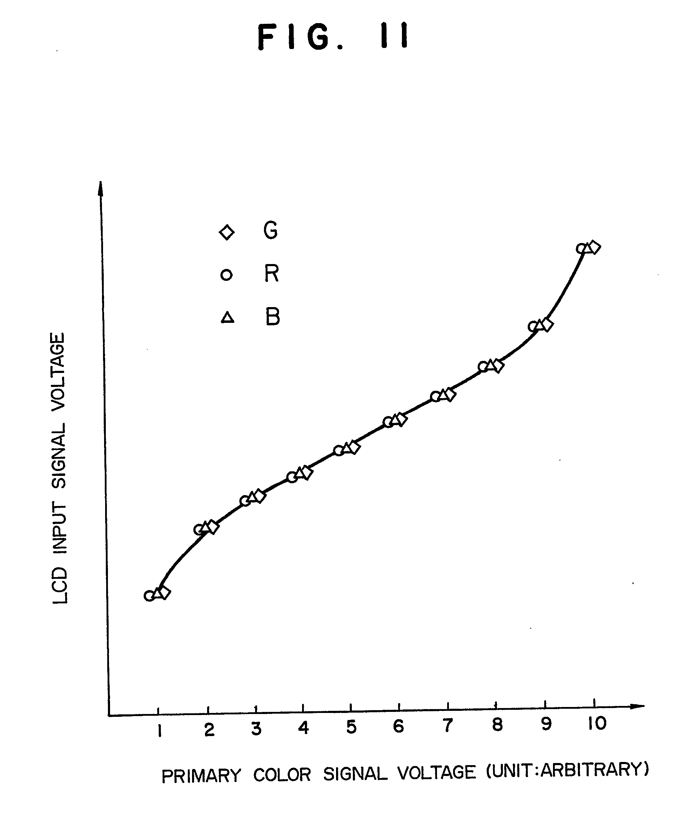

Fig. 11 shows input and output characteristics of a correction circuit for primary color signals of R, G and B in the present invention. The input voltage in the horizontal axis corresponds to the primary color signal voltage of each R, G and B while the output voltage in the vertical axis corresponds to LCD input signal voltage of each R, G and B. The same correction is made for R, G and B. Therefore, since a correction circuit having the same characteristics can be used, the present invention has an advantage that the structure of a driving circuit is simplified.

Second Embodiment

A description will be given of a second embodiment with reference to Fig. 2. Fig. 2 shows a projection type display unit of the present invention in which three liquid crystal display devices (LCD) 11r, 11g and 11b are used. The basic construction thereof is the same as that of the first embodiment. However, neutral density filters 18r and 18g having transmittances 54%, 86% respectively are disposed on the incidence side of LCDs for R and G instead of the emission side of the LCDs.

By effecting this embodiment, the same advantage as that of the first embodiment can be obtained. In the above-mentioned prior art and in the first embodiment, since unrequired light enters into LCDs for R and G, various problems have arisen because of the heat generated in LCDs or peripheral members. For example, the problems include degradation of the polarizing plates 4a and 4b, malfunction of LCDs, and the flow-out of liquid crystals as the result of the degradation of the sealing section for sealing liquid crystals. Effecting this embodiment results in an advantage that unnecessary light does not enter LCDs and therefore various problems which arise due to the generated heat are diminished.

Third Embodiment

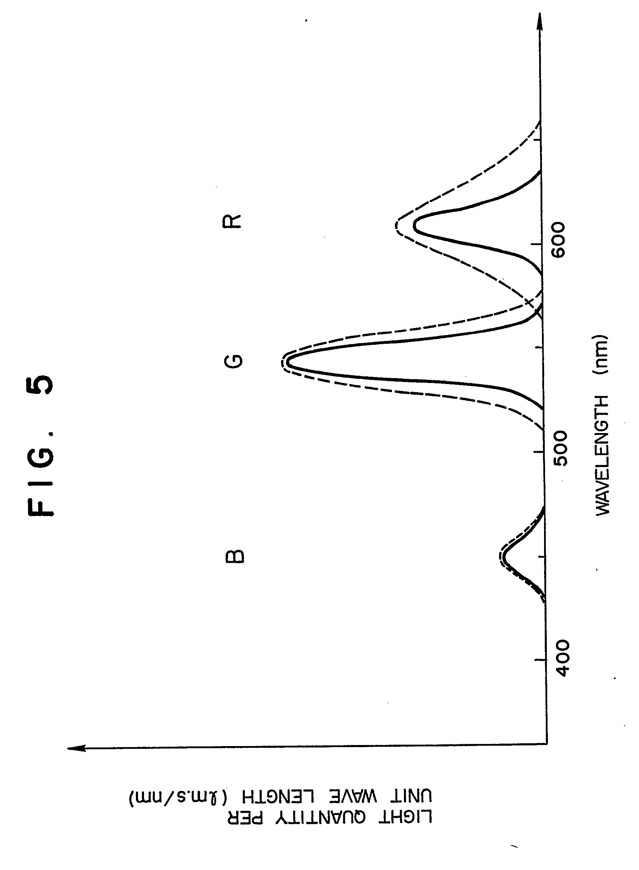

A description will be given of a third embodiment. The basic construction of this embodiment is the same as that of the second embodiment. The point of difference is that interference filters 18r and 18g in place of neutral density filters are disposed on the light incidence side of LCDs for R and G. Generally, the three primary colors that enter an LCD have a distribution with a certain wavelength as a peak. By disposing interference filters, the peak transmission light quantity and the spectroscopic characteristics of R, G and B are made to vary and a white balance is achieved. In Fig. 5, the dashed line indicates wavelength characteristics after the light is divided by a dichroic mirror; the solid line indicates wavelength characteristics after the light is further made to pass through the interference filters 18r and 18g and a white balance is achieved.

With the construction described above, this embodiment has the same advantage as that of the second embodiment. This embodiment has the additional advantage that, since the wavelength distribution range of R and G lights is narrower than that of the prior art, the color purity of the picture image on a screen is improved and the picture quality is improved.

The same advantage as that of the above-mentioned embodiment can be expected if absorption type filters such as color glass filters, or gelatin filters are used in place of the interference filters. The same advantage as that of the above-mentioned embodiment can be expected by changing the reflection characteristics of the dichroic mirrors 12r and 12g according to R, G and B even if a filter is not newly disposed.

Fourth Embodiment

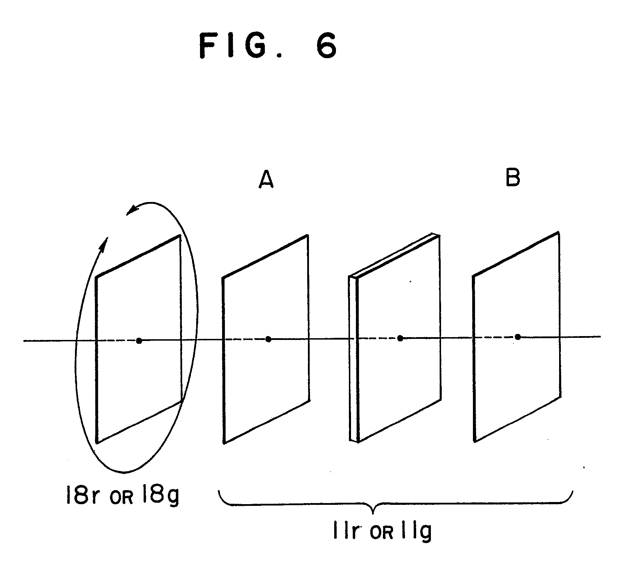

A description will be given of a fourth embodiment with reference to Fig. 6. The construction of the unit is the same as that of the second embodiment. A point of difference is that polarizing plates 18r and 18g are disposed in place of neutral density filters. Fig. 6 is a schematic configurational view in which sections of this polarizing plate and LCDs are enlarged. This polarizing plate is made rotatable by a signal from the outside about the incidence axis in a plane vertical to the light incidence direction so that the direction of the polarizing axis can be changed at will. As a result, by varying the intersection angle of another polarizing plate A with respect to the polarizing axis, the illuminance of light that enters into an LCD is made controllable. The illuminance of the incidence to LCDs for R, G and B is controlled and a white balance is achieved on a screen.

With the construction described above, this embodiment has the same advantage as that of the second embodiment. The first through the third embodiments have a problem in that, even under a state in which a white balance is achieved at a start time, variations in the transmittance of an LCD as the result of variations in the temperature of this unit and variations in the spectroscopic characteristics as the result of the degradation of the light source occur and a white balance cannot be achieved. This embodiment also has the advantage that, by varying the direction of the polarizing axes of the polarizing plates 18r and 18g by supplying a signal from the outside, the light quantity incident on an LCD is made to vary and a return to the state in which a white balance is kept is made possible.

Many widely different embodiments of the present invention can be made without departing from the spirit and scope thereof, therefore it is to be understood that this invention is not limited to the specific embodiments thereof except as defined in the appended claims.

**Claims**

1. A projection type display unit which combines picture images from two or more liquid-crystal display devices and displays one picture image, wherein a means for adjusting the luminance ratio of two or more lights that enter or emit into or from said two or more liquid-crystal display devices is disposed in the light path between a light source and a combined picture-image display section.

2. A projection type display unit in which three primary color lights, red (R), green (G) and blue (B) are introduced into three corresponding liquid-crystal display devices and then these color lights are combined combination picture-image display section at a predetermined place to form a color picture image, wherein a means for varying the luminance ratio among said three primary color lights is provided in the light path from the light source and said combination picture-image display section.

3. A projection type display unit in which three primary color lights, red (R), green (G) and blue (B) color lights are introduced into three corresponding liquid-crystal display devices and then these colors are combined at a predetermined place to form a color picture image, wherein a means for varying the luminance ratio among said the three primary color lights is provided in the light path from the light source and the liquid crystal surface of the light incidence side of said liquid-crystal display devices.

4. A projection type display unit as claimed in claim 2, wherein displayed picture image which is emitted from three liquid-crystal display devices in such a state that transmittances have reached a maximum saturation state or are almost equal to each other, and which is synthesized on a screen is of a white color light which is almost color-balanced.

5. A projection type display unit as claimed in claim 2, wherein said three primary color lights are obtained by a means for dividing a white color light.

6. A projection type display unit as claimed in claim 5, wherein said means for dividing a white color light into said three primary color light is a plurality of dichroic mirrors, and reflection characteristics (reflectivity and half-value width) are optimumly designed among said plurality of dichroic mirrors.

7. A projection type display unit as claimed in claim 2, wherein said means for varying the luminance ratio of R, G and B is composed of neutral density filters.

8. A projection type display unit as claimed in claim 2, wherein said means for varying the luminance ratio of R, G and B is composed of color filters or interference filters.

9. A projection type display unit as claimed in claim 2, wherein said means for varying the luminance ratio of R, G and B is composed of optical devices (e.g., polarizing plates, $\lambda$/n plates (n = 1, 2, 3, ...) or polarizing beam splitters).

10. A projection type display unit as claimed in claim 9, further comprising two or more polarizing plates, and a means for adjusting the angle between the polarizing axes of said respective polarizing plates.

B5837

# F I G. 1

# F I G. 2

# FIG. 3

# FIG. 4

FIG. 5

# FIG. 6

A          B

18r OR 18g

IIr OR IIg

# FIG. 7

# FIG. 8

# FIG. 9

# FIG. 10

◇   G

○   R

△   B

LCD INPUT SIGNAL VOLTAGE

1    2    3    4    5    6    7    8    9    10

PRIMARY COLOR SIGNAL VOLTAGE
(NORMALIZED UNIT)

# FIG. II

PRIMARY COLOR SIGNAL VOLTAGE (UNIT:ARBITRARY)